# EUROPÄISCHE PATENTSCHRIFT

(11) **EP 2 009 308 B1**
(45) Veröffentlichungstag und Bekanntmachung des Hinweises auf die Patenterteilung: **14.12.2011**
(21) Anmeldenummer: 08010674.3
(22) Anmeldetag: 12.06.2008
(51) Int. Cl.: F16D 25/08

(54) **Kupplungsausrücksystem**
Coupling disengaging system
Système de déclenchement à couplage

(30) Priorität: 25.06.2007 DE 102007029207
(43) Veröffentlichungstag der Anmeldung: 31.12.2008
(73) Patentinhaber: Schaeffler Technologies GmbH & Co. KG, 91074 Herzogenaurach (DE)
(72) Erfinder: Welter, Roland, Dr., 77815 Bühl (DE)

(56) Entgegenhaltungen:
- WO-A1-96/24781
- WO-A1-2005/045271
- DE-A1- 3 504 086
- DE-A1- 10 151 308
- DE-A1- 19 637 106

## Beschreibung

Die Erfindung betrifft ein Kupplungsausrücksystem mit einem um eine Getriebeeingangswelle konzentrisch angeordneten, druckbeaufschlagten Nehmerzylinder.

Derartige Kupplungsausrücksysteme mit sogenannten Zentralausrückern sind beispielsweise aus der DE 196 37 106 A1 bekannt.

Diese Lösung verkörpert eine konzentrisch aufgebaute Auskuppelvorrichtung für Kraftfahrzeuge, die für eine Normung solche Auskuppelvorrichtungen ein entsprechend mit einer Sohle gestaltetes Gehäuse aufweist, um mittels einer Bajonettverbindung auf ein anderes Gehäuse auf einfache Art und Weise montiert werden zu können.

Weiter wird in der WO 2005/045271 A1 ein konzentrisch um eine Getriebeeingangswelle angeordneter Kupplungsaktor beschrieben, die eine Lösung zur Kompensation eines Winkelversatzes zwischen Kurbelwelle und Getriebeeingangswelle offenbart. Bei dieser Lösung ist der im Gehäuse des Aktors axial verlagerbare Ringkolben in axialer Richtung in zwei Teile unterteilt, wobei die miteinander in Eingriff stehenden Stirnflächen der beiden Teilkolben zur Ermöglichung eines Abwälzvorganges in Folge der radialen Auslenkung des kupplungsseitigen Endes des mit der Kupplung in Wirkverbindung stehenden Teilkolbens sphärisch ausgebildet sind. Für die Realisierung der Kompensation des Winkelversatzes sind dabei mehrere Bauteile erforderlich, die zur Nachbildung einer Gelenkfunktion entsprechend bearbeitet werden müssen, wodurch diese Lösung arbeits- und kostenintensiv ist.

Daher besteht die Aufgabe der Erfindung darin, Ausrücksysteme für in der Praxis häufig auftretenden Winkelversatz zwischen Kurbelwelle und Getriebeeingangswelle zu gestalten, die einfach aufgebaut und kostengünstig herstellbar sind.

Die Aufgabe wird durch ein Kupplungsausrücksystem mit einem um eine Getriebeeingangswelle angeordneten Zentralausrücker mit einem eine hohlzylindrische Druckkammer bildenden Gehäuse, einem in dem Gehäuse abhängig von einem anstehenden Druck eines Druckmittels axial verlagerbaren Ringkolben, wobei der Ringkolben hülsenförmig ausgestaltet ist und an einem kupplungsseitigen Ende an einem Betätigungslager zur Betätigung einer Reibungskupplung und am entgegengesetzten, dichtungsseitigen Ende an einer die Druckkammer abdichtenden Ringdichtung anliegt und der Innendurchmesser des dichtungsseitigen Endes kleiner als der Innendurchmesser des kupplungsseitigen Endes des Ringkolbens ist, gelöst. Auf diese Weise kann der Ringkolben gegenüber der Führungsfläche an seinem kupplungs-seitigen Ende in einem begrenzten Maße gegenüber einer engen Führung im Bereich der Ringdichtung verschwenken und damit einen gegebenenfalls vorhandenen Winkelversatz zwischen der Kurbelwelle und der Getriebeeingangswelle ausgleichen.

Der Ringkolben kann aus Metall, beispielsweise in Form von Aluminiumdruckguss oder tief gezogen aus Stahl hergestellt sein. Vorteilhafterweise kann er auch beispielsweise mittels Spritzgießverfahren aus Kunststoff hergestellt sein. Verstärkte, beispielsweise glas- oder kohlefaserverstärkte Kunststoffe haben sich dabei als besonders vorteilhaft erwiesen, wenn erhöhte Festigkeiten erforderlich sind.

Um eine Verringerung des Durchmessers am dichtungsseitigen Ende zu erzielen, kann an dem dichtungsseitigen Ende des Ringkolbens ein den Innendurchmesser verringernder Ballus vorgesehen sein, an dem der Anlagekontakt zur Dichtfläche der Ringdichtung oder einem diese aufnehmenden Dichtungsträger so optimiert ist, dass eine kardanische Verlagerung der beiden Teile gegeneinander zu einem Ausgleich des Winkelversatzes innerhalb des Zentralausrückers führt und das Betätigungslager gleichmäßiger beaufschlagt wird. Das Betätigungslager kann je nach Ausführung der Kupplung als aufgedrückte oder zugedrückte Kupplung ein Aus- oder Einrücklager sein.

Einer weiteren vorteilhaften Ausgestaltung folgend kann die Ringdichtung an einem Dichtungsträger aufgenommen sein, der auf einer Führungsfläche der Druckkammer gleitet. Als Führungsflächen eignen sich die Außen- und/oder Innenflächen des ringzylinderischen Raumes der Druckkammer.

In einer weiteren vorteilhaften Ausgestaltung der Erfindung ist das Gehäuse des Zentralausrückers an einer Wandung eines Getriebegehäuses kardanisch gelagert aufgenommen. Hierzu kann in Abwandlung der im Stand der Technik bekannten festen Aufnahme des Zentralausrückers an der Wandung des Getriebegehäuses oder an einem anderen fahrzeugfesten Bauteil eine kardanische Aufnahme des gesamten Zentralausrückers vorgenommen werden, so dass sich dieser bereits bezüglich seiner Ausrichtung gegenüber einem Winkelversatz zwischen Getriebe und Motor, das heißt zwischen Getriebeeingangswelle und auf der Kurbelwelle des Motors aufgenommener Kupplung, einstellen kann. Derartige kardanische Aufnahmen können an der Gehäusewand oder an der Getriebegehäusewand als ballige Anformungen gebildet sein, auf dem das entsprechend andere Teil über ein begrenztes Maß abwälzen kann. Dementsprechend kann eine elastische Befestigung, beispielsweise mittels Federelementen, wie Blattfedern, vorgesehen werden.

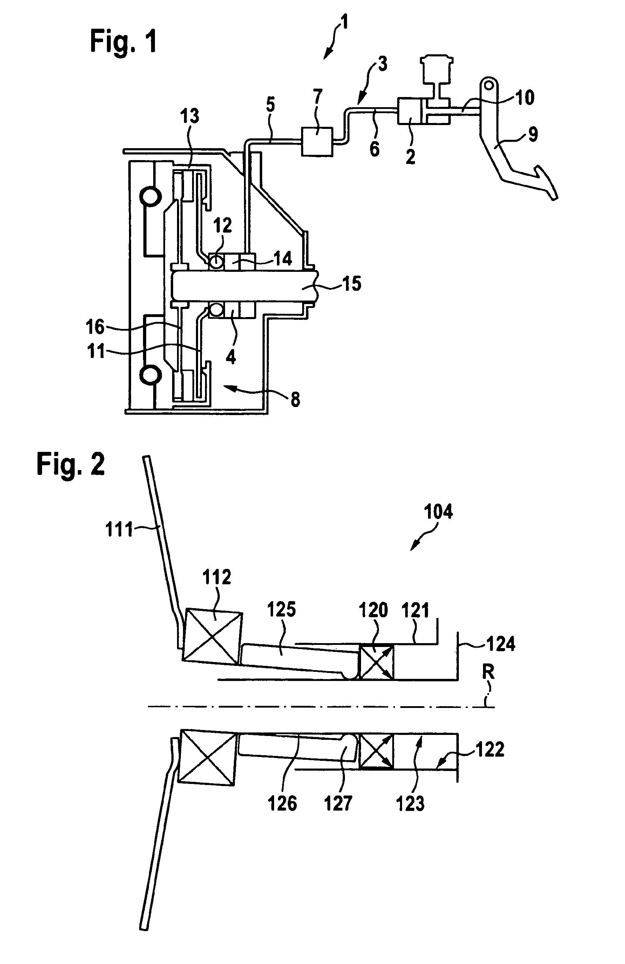

Die Erfindung wird anhand der Figuren 1 und 2 näher erläutert. Dabei zeigen:
Figur 1 einen schematisch dargestellten Aufbau eines Ausführungsbeispiels eines Kupplungsausrücksystems und
Figur 2 ein schematisch dargestelltes Ausführungsbeispiel eines Zentralausrückers.

Figur 1 zeigt in schematischer Darstellung eine mögliche Ausgestaltung eines Kupplungsausrücksystems 1 mit einem Geberzylinder 2 und einem mittels einer Leitung 3 mit dem Geberzylinder verbundenen Nehmerzylinder 4. Zwischen den Leitungsteilen 5 und 6 oder integriert in Geber- oder Nehmerzylinder kann ein Filter 7, das als Druckbegrenzungsventil und/oder als sogenanntes Kribbelfilter dienen kann, eingebaut sein.

Das Kupplungsausrücksystem 1 betätigt die Kupplung 8 hydraulisch durch Beaufschlagung des Geberzylinders 2 mittels eines Betätigungsgliedes 9, das ein Fußpedal, ein Aktor, beispielsweise ein elektrischer Aktor, oder dergleichen sein kann. Hierdurch wird mittels einer mechanischen Übertragung 10 Druck im Geberzylinder 2 aufgebaut, der die Leitung 3 einen Druck im Nehmerzylinder 4, der als Zentralausrücker ausgestaltet ist, aufbaut. Der Nehmerzylinder 4 bringt über ein Betätigungslager 12 die nötige Ausrückkraft an die Kupplung 8, beziehungsweise an deren Betätigungselemente 11, beispielsweise eine Tellerfeder oder einen Betätigungshebel. Die Art der Verspannung der Betätigungselemente 11 mit dem Kupplungsdeckei 13 legt fest, ob es sich um eine zu- oder aufgedrückte Kupplung handelt. Dementsprechend wird die Kupplung bei Beaufschlagung des Betätigungslagers 12 durch den Ringkolben 14 geöffnet oder im Falle einernicht dargestellten zugedrückten Kupplung - durch den Ringkolben geschlossen. Die Getriebeeingangwelle 15 überträgt bei geschlossener Kupplung 8 das Drehmoment der - nicht dargestellten-, mit der Kupplung drehfest verbundenen Brennkraftmaschine auf ein nicht näher dargestelltes Getriebe und anschließend auf die Antriebsräder eines Kraftfahrzeuges.

Durch einen Winkelversatz der Kupplung 8 gegenüber der Getriebeeingangswelle 15 kann es zu einem Fehlverhalten der Kupplung bezüglich Komfort, insbesondere sogenanntem geometrischem Rupfen und übermäßigem Verschleiß kommen, da durch den Winkelversatz der Reibeingriff zwischen den Reibeingriffsflächen der Kupplung 8 und denen der mit der Getriebeeingangswelle 15 drehfest verbundenen Kupplungsscheibe 16 ungleichmäßig ist.

Es wird daher eine in Figur 2 schematisch dargestellte Ausführungsform des Nehmerzylinders 4 in Form eines geänderten Zentralausrückers 104 vorgeschlagen und nachfolgend beschrieben, der bei einer Schiefstellung der Tellerfeder, insbesondere der Tellerfederzungen 111 oder Änderung eines Betätigungshebels bei Verwendung eines solchen die Schiefstellung zumindest teilweise ausgleichen kann. Hierzu ist das ebenfalls schiefstehende, da auf der schiefen Ebene der Tellerfederzungen 111 anliegende oder an diesen befestigte Betätigungslager 112 gegen die Dichtung 120 kardanisch verschwenkbar angeordnet. Die Dichtung 120 ist in der hohlzylindrischen Druckkammer 121 axial verlagerbar abhängig vom in der Druckkammer anstehenden Druck im Wesentlichen parallel zur Rotationsachse der Getriebeeingangswelle 15 (siehe Figur 1) infolge einer fluchtenden Befestigung der zueinander parallelen äußeren und inneren Dichtflächen 122, 123 des Gehäuses 124 durch Befestigung an der - nicht dargestellten - Getriebegeäusewand geführt. Es versteht sich, dass jedoch auch Abweichungen von einer fluchtenden Befestigung zu einem Winkelversatz führen können, die durch den gezeigten Zentralausrücker 104 kompensiert werden können.

Der durch einzelne oder in Summe auftretende Winkelversatz wird zwischen Dichtung 120 und Betätigungslager 112 durch einen Ringkolben 125 der an seinem dem Betätigungslager 112 zugewandten Ende schwenkar, während sein Innendurchmesser im Bereich der Dichtung 120 enger toleriert und auf der Führungshülse 126 geführt ist. Die weitere Tolerierung gegenüber der Führungshülse 126 im Bereich des Betätigungslagers führt zu einer begrenzten Verschwenkbarkeit und damit zu einer Anpassung und Vermittlung der unterschiedlichen Anlagewinkel an Dichtung 120 und Betätigungslager 112. Die beidseitigen Anlageflächen des Ringkolbens 125 können an die Verschwenkgemetrie angepasst sein, beispielsweise können sie entsprechend gerundet sein. Zum Ausgleich der Unterschiede des Innendurchmessers des Ringkolbens 125 ist in dem gezeigten Ausführungsbeispiel ein Ballus 127 vorgesehen, der den Durchmesser nach radial innen verringert. Die Form des Ballus 127 kann ebenfalls der erforderlichen Verschwenkung angepasst sein.

### Bezugszeichenliste

| | | | |
|---|---|---|---|
| 1 | Kupplungsausrücksystem | 15 | Getriebeeingangswelle |
| 2 | Geberzylinder | 16 | Kupplungsscheibe |
| 3 | Leitung | 104 | Zentralausrücker |
| 4 | Nehmerzylinder | 111 | Tellerfederzungen |
| 5 | Leitungsteil | 112 | Betätigungslager |
| 6 | Leitungsteil | 120 | Dichtung |
| 7 | Filter | 121 | Druckkammer |
| 8 | Kupplung | 122 | Dichtfläche |
| 9 | Betätigungsglied | 123 | Dichtfläche |
| 10 | Mechanische Übertragung | 124 | Gehäuse |
| 11 | Betätigungselement | 125 | Ringkolben |
| 12 | Betätigungslager | 126 | Führungshülse |
| 13 | Kupplungsdeckel | 127 | Ballus |
| 14 | Ringkolben | R | Rotationsachse |

## Patentansprüche

1. Kupplungsausrücksystem (1) mit einem um eine Getriebeeingangswelle (15) angeordneten Zentralausrücker (104) mit einem eine hohlzylindrische Druckkammer (121) bildenden Gehäuse (124), einem in dem Gehäuse (124) abhängig von einem anstehenden Druck eines Druckmittels axial verlagerbaren Ringkolben (14, 125), wobei der Ringkolben (14, 125) hülsenförmig ausgestaltet ist und an einem kupplungsseitigen Ende an einem Betätigungslager (12, 112) zur Betätigung einer Kupplung (8) und am entgegengesetzten, dichtungsseitigen Ende an einer die Druckkammer (121) abdichtenden Dichtung (120) anliegt und der Innendurchmesser des dichtungsseitigen Endes kleiner als der Innendurchmesser des kupplungsseitigen Endes des Ringkolbens (125) ist, **dadurch gekennzeichnet, dass** der Ringkolben (14, 125) einteilig ausgeführt und relativ zum Gehäuse (124) begrenzt schwenkbar in der Druckkammer (121) angeordnet ist.

2. Kupplungsausrücksystem (1) nach Anspruch 1, **dadurch gekennzeichnet, dass** an dem dichtungsseitigen Ende des Ringkolbens (125) ein den Innendurchmesser verringernder Ballus (127) angebracht ist.

3. Kupplungsausrücksystem (1) nach Anspruch 1 oder 2, **dadurch gekennzeichnet, dass** die Dichtung an einem Dichtungsträger aufgenommen ist, der auf einer Führungsfläche der Druckkammer gleitet.

4. Kupplungsausrücksystem (1) nach Anspruch 1, **dadurch gekennzeichnet, dass** das Gehäuse (124) an einer Wandung eines Getriebegehäuses kardanisch gelagert aufgenommen ist.

## Claims

1. Clutch release system (1) having a central release device (104) which is arranged around a transmission input shaft (15), said central release device having a housing (124) which forms a hollow-cylindrical pressure chamber (121) and having an annular piston (14, 125) which can be displaced axially in the housing (124) as a function of a prevailing pressure of a pressure medium, wherein the annular piston (14, 125) is formed in the manner of a sleeve and bears, at a clutch-side end, against an actuating bearing (12, 112) for actuating a clutch (8), and at the opposite, seal-side end, against a seal (120) which seals off the pressure chamber (121), and the inner diameter of the seal-side end is smaller than the inner diameter of the clutch-side end of the annular piston (125), **characterized in that** the annular piston (14, 125) is formed in one piece and is arranged in the pressure chamber (121) so as to be pivotable relative to the housing (124) to a limited extent.

2. Clutch release system (1) according to Claim 1, **characterized in that** the seal-side end of the annular piston (125) has formed thereon a domed protrusion (127) which reduces the inner diameter.

3. Clutch release system (1) according to Claim 1 or 2, **characterized in that** the seal is held on a seal carrier which slides on a guide surface of the pressure chamber.

4. Clutch release system (1) according to Claim 1, **characterized in that** the housing (124) is held in a cardanically mounted manner on a wall of a transmission housing.

## Revendications

1. Système de débrayage d'embrayage (1) comprenant un dispositif de débrayage central (104) disposé autour d'un arbre d'entrée de boîte de vitesses (15) avec un boîtier (124) formant une chambre de pression cylindrique creuse (121), un piston annulaire (14, 125) déplaçable axialement dans le boîtier (124) en fonction de l'application d'une pression d'un fluide sous pression, le piston annulaire (14, 125) étant configuré sous forme de manchon et s'appliquant à une extrémité du côté de l'embrayage contre un palier d'actionnement (12, 112) pour l'actionnement d'un embrayage (8) et à l'extrémité opposée du côté du joint d'étanchéité, contre un joint d'étanchéité (120) rendant étanche la chambre de pression (121), et le diamètre intérieur de l'extrémité du côté du joint d'étanchéité étant inférieur au diamètre intérieur de l'extrémité du côté de l'embrayage du piston annulaire (125), **caractérisé en ce que** le piston annulaire (14, 125) est réalisé d'une seule pièce et est disposé de manière à pouvoir pivoter de manière limitée par rapport au boîtier (124) dans la chambre de pression (121).

2. Système de débrayage d'embrayage (1) selon la revendication 1, **caractérisé en ce qu'**une partie bombée (127) réduisant le diamètre intérieur est réalisée sur l'extrémité du côté du joint d'étanchéité du piston annulaire (125).

3. Système de débrayage d'embrayage (1) selon la revendication 1 ou 2, **caractérisé en ce que** le joint d'étanchéité est reçu sur un support de joint d'étanchéité, qui glisse sur une surface de guidage de la chambre de pression.

4. Système de débrayage d'embrayage (1) selon la revendication 1, **caractérisé en ce que** le boîtier (124) est reçu de manière supportée par un cardan sur une paroi d'un carter de boîte de vitesses.
